# EUROPÄISCHE PATENTSCHRIFT

(11) **EP 0 678 057 B1**
(45) Veröffentlichungstag und Bekanntmachung des Hinweises auf die Patenterteilung: **19.08.1998**
(21) Anmeldenummer: 94905017.3
(22) Anmeldetag: 10.01.1994
(51) Int. Cl.: B01J 35/04, F01N 3/28

(54) **EXTRUDIERTER WABENKÖRPER AUS KERAMISCHEM UND/ODER METALLISCHEM MATERIAL MIT ERHÖHTER FLEXIBILITÄT**
EXTRUDED HONEYCOMB ELEMENTS MADE OF CERAMIC AND/OR METALLIC MATERIAL WITH ENHANCED FLEXIBILITY
ELEMENT ALVEOLE EXTRUDE EN MATIERE CERAMIQUE ET/OU METALLIQUE, AYANT UNE FLEXIBILITE RENFORCEE

(30) Priorität: 11.01.1993 DE 4300477
(43) Veröffentlichungstag der Anmeldung: 25.10.1995
(73) Patentinhaber: Emitec Gesellschaft für Emissionstechnologie mbH, 53797 Lohmar (DE)
(72) Erfinder: MAUS, Wolfgang, D-51429 Bergisch Gladbach (DE)
(74) Vertreter: Kahlhöfer, Hermann, Dipl.-Phys.
(86) Internationale Anmeldenummer: EP9400044
(87) Internationale Veröffentlichungsnummer: WO9415712

(56) Entgegenhaltungen:
- EP-A- 0 245 736
- EP-A- 0 502 731
- DE-B- 2 538 613
- FR-A- 2 346 048
- FR-A- 2 402 064
- US-A- 4 448 828

## Beschreibung

Die vorliegende Erfindung betrifft einen extrudierten Wabenkörper aus keramischem und/oder metallischem Material mit einer Vielzahl von durch Trennwände voneinander getrennten etwa parallel verlaufenden Kanälen. Solche Wabenkörper, die insbesondere in katalytischen Konvertern für Verbrennungsmaschinen Anwendung finden, sind beispielsweise in der US-PS 3,853,485 beschrieben.

Solche Körper werden für gewöhnlich aus einem pulver- oder granulatförmigen keramischen Material extrudiert, getrocknet und später gebrannt.

In jüngster Zeit wird dieses Herstellungsverfahren auch zur Herstellung elektrisch leitfähiger Wabenkörper, die elektrisch beheizbar sind, angewendet, wobei ein metallisches Material oder eine Mischung aus keramischem und metallischem Material verwendet wird. Solche Wabenkörper sind beispielsweise in der EP-A1-0 465 184 beschrieben. Um den elektrischen Widerstand und den Verlauf eines elektrischen Stromes in einem solchen Wabenkörper zu beeinflussen, werden zusätzlich Schlitze vorgesehen, welche im allgemeinen parallel zu den extrudierten Strukturen verlaufen.

Typische Querschnittsformen für Kanäle extrudierter Wabenkörper sind entweder Quadrate, Rechtecke oder andere Polygone. Insbesondere in der US-PS 3,853,485, in der in unterschiedlichen Querschnittsbereichen unterschiedliche Kanalzahlen pro Querschnittsfläche vorgesehen sind, sind verschiedene Polygonzüge als Querschnittsformen beschrieben.

Trotzdem ist allen bisher bekannten extrudierten Wabenkörpern gemeinsam, daß sie bevorzugte Ausrichtungen von Kanalwänden aufweisen, wobei diese bevorzugte Ausrichtung der Kanalwände zu einer geringen Elastizität in Richtung dieser Vorzugsausrichtung führt. Bei quadratischen Kanälen weisen die Körper praktisch überhaupt keine Elastizität in Richtung der Stege auf, und auch bei den typischen sechseckigen Wabenformen ist die Elastizität sehr gering. Dies ändert sich auch dann nicht, wem zusätzliche Wände, wie in der US-PS 3,853,485 gezeigt, in unterschiedlichen Richtungen angeordnet sind.

Durch die DE 25 38 613 A1 ist ein extrudierter Wabenkörper aus keramischem Material mit einer Vielzahl von durch Trennwände voneinander getrennten Kanälen bekannt. Alle verbindenden Zellwände zwischen den Nahtlinien aneinander grenzender Kanäle sind gekrümmt ausgebildet und in einem wiederkehrenden symmetrischen Muster derart räumlich zueinander angeordnet, daß im Umfang eines jeden Kanals die aneinanderstoßenden Wände abwechselnd einwärts und auswärts gekrümmt sind. Jeder Kanal wird von mindestens zwei Sätzen einander gegenüberliegender gekrümmter Wände gebildet. Ausdehnungsbewegungen in Richtung quer zur Längserstreckung der Kanäle bewirken eine Verformung und Streckung einander gegenüberliegender gekrümmter Wände ohne engeres Zusammendrücken von Nahtlinien zwischen den Kanälen.

Desweiteren ist durch die FR 2 346 048 A1 ein keramischer Wabenkörper mit einer Vielzahl untereinander verbundener Kanäle bekannt, wobei die Kanäle ein sich wiederholendes symmetrisches Muster bilden. Die Wände der Kanäle sind zur Kanalachse hin gekrümmt ausgebildet, wobei die im Umfang eines jeden Kanals aneinanderstoßenden Wände abwechselnd je einer halben Sinuswelle entsprechend konkav und konvex gekrümmt sind. Durch diese Ausgestaltung der Wände soll eine Elastizität des Wabenkörpers erzielt werden. Die einzelnen Kanäle sind jedoch immer noch entlang gerader Linien angeordnet, so daß es Vorzugsrichtungen in dem Wabenkörper gibt.

Neben den seit vielen Jahren bekannten extrudierten Wabenkörpern werden in zunehmendem Maße auch aus Blechen hergestellte Wabenkörper verwendet, wobei durch eine geeignete Strukturierung und das lagenweise Anordnen von Blechen geeignete Wabenkörper hergestellt werden. Neben den zunächst verwendeten, aus Blechen spiralig gewickelten Wabenkörpern, sind inzwischen eine Vielzahl von Formen mit wesentlich erhöhter Elastizität bekannt. In der EP-B-0 245 736 ist dabei eine für die Elastizität ganz entscheidende prinzipielle Bauform beschrieben, bei der einzelne Blechlagen etwa evolventenförmig von einem Zentrum nach außen verlaufen. Entsprechend diesem Prinzip hergestellte Wabenkörper sind auch in der WO 90/03220 und in etwas abgewandelter Form auch in der WO 92/02717 beschrieben. Ähnliche Eigenschaften ergeben sich auch bei Körpern, die aus S-förmig verschlungenen Blechen bestehen, wobei die Elastizitätseigenschaften und das Schwingungsverhalten durch zusätzliche verstärkte Lagen beeinflußt werden können, wie beispielsweise in der WO 89/07488 beschrieben. Solche und ähnliche Bauformen haben sich gerade wegen ihrer Elastizität auch als besonders geeignet für elektrisch beheizbare Wabenkörper erwiesen, wie beispielsweise in der WO 92/02714 angegeben.

Aufgabe der vorliegenden Erfindung ist es, die Elastizität von extrudierten Wabenkörpern zu erhöhen, wobei insbesondere die Elastizitätseigenschaften in unterschiedlichen Richtungen nicht unterschiedlich sein sollen. Eine erhöhte Elastizität solcher Wabenkörper erhöht deren Lebensdauer unter thermischen Wechselbelastungen und erlaubt eine größere Flexibilität bei der Gestaltung, insbesondere bei beheizbaren Wabenkörpern.

Zur Lösung dieser Aufgabe dient ein extrudierter Wabenkörper aus keramischem und/oder metallischem Material mit einer Vielzahl von durch Trennwände voneinander getrennten, etwa parallel verlaufenden Kanälen, bei dem zumindest in einem äußeren Querschnittsbereich des Wabenkörpers ein Teil der Trennwände einer von innen nach außen spiralförmig oder etwa evolventenförmig gekrümmten Linie folgt, wobei Kanäle ebenfalls entlang dieser Linie angeordnet sind. In radialer Richtung starre Strukturen führen zu einer Starrheit des Körpers in dieser Richtung und zu einer Bruchgefahr bei im Winkel dazu verlaufenden Kräften. Starre in Umfangsrichtung verlaufende Strukturen, also kreisförmige Strukturen, erhöhen ebenfalls die Steifigkeit des ganzen Körpers. Es ist daher für die Flexibilität eines Körpers wichtig solche Strukturen zu vermeiden. Trotzdem wurden bisher für überwiegend extrudierte Wabenkörper regelmäßige, symmetrische Anordnungen verwendet, bei denen immer Vorzugsrichtungen von Trennwänden auftreten. Im inneren Bereich eines Wabenkörpers spielt dies keine entscheidende Rolle, jedoch sollte zumindest in einem äußeren Bereich von mindestens 30 %, vorzugsweise mehr als 50 %, des Radius eine flexiblere Struktur gewählt werden. Da heutige Formen für Extruder meist durch Elektrokorrodieren hergestellt werden, stellt es kein technisches Problem dar, praktisch beliebige Formen von Kanalwänden zu extrudieren, auch wenn aufgrund verschiedener Vorurteile in der Fachwelt nicht versucht wurde, andere Kanalformen als mit polygonalen Querschnitt zu verwirklichen. Ein Grund mag darin liegen, daß die Körper nach dem Extrudieren zunächst noch relativ weich sind, so daß eine gewisse Steifigkeit zumindest in der Richtung, in der die Schwerkraft wirkt, durchaus erwünscht ist. Trotzdem ist bei den modernen Fertigungstechniken selbst unter diesem Gesichtspunkt eine fast beliebige Formgebung der Kanalwände möglich.

Günstig ist es, wenn zumindest in einem äußeren Bereich ein Teil der Trennwände im Querschnitt gebogen von innen nach außen verläuft. Dabei sollten die Trennwände vorzugsweise spiralförmig oder insbesondere etwa evolventenförmig von innen nach außen verlaufen. Solche Formen sind besonders elastisch und ermöglichen trotzdem die gleichmäßige Ausfüllung eines Querschnittes mit Trennwänden.

Um die Zwischenräume zwischen den gebogenen Trennwänden durch weitere Trennwände in Kanäle zu unterteilen, gibt es eine Vielzahl von Möglichkeiten. Wichtig ist dabei wieder, daß die Trennwände zwischen den gebogenen Trennwänden nicht untereinander wieder starre Stege in radialer Richtung bilden. Die Richtung der Querstege zwischen den gebogenen Trennwänden sollte daher deren Verlauf angepaßt sein, insbesondere so, daß deren Richtung dem Verlauf der Linie angepaßt ist.

Die vorliegende Erfindung ist insbesondere auch für aus metallischem Material extrudierte Wabenkörper geeignet, die versintert werden. Auch für Wabenkörper aus einem extrudierten Gemisch von Metall- und Keramikpulver, in welche Schlitze zur elektrisch isolierenden Unterteilung eingebracht werden sollen, ist die vorliegende Erfindung besonders wichtig. Da solche Schlitze den Körper im allgemeinen so unterteilen, daß ein Strom ihn mäanderförmig durchlaufen kann, sind die an die Schlitze angrenzenden Bereiche mechanisch besonders belastet, so daß hier elastische Bauformen große Vorteile bringen. Auch der Verlauf der Schlitze kann in erfindungsgemäßen Wabenkörpern parallel zu gebogenen Trennwänden gewählt werden, insbesondere parallel zu spiral- oder evolventenförmig verlaufenden Trennwänden.

Auch ist es möglich, durch entsprechende Formgebung des Extruders einen Teil der Trennwände dicker als die übrigen Trennwände zu extrudieren, um z. B. die Schwingungsneigung eines solchen Körpers zu verringern oder gezielt Kräfte an bestimmten Stellen einzuleiten.

Da gerade verlaufende Wandabschnitte immer in unterschiedlichen Richtungen eine unterschiedliche Flexibilität aufweisen, ist es besonders vorteilhaft, wenn auch in extrudierten Wabenkörpern die Trennwände im wesentlichen nur aus gekrümmten Abschnitten bestehen. Bei aus unterschiedlich gewellten Blechlagen gewickelten Wabenkörpern ergibt sich eine solche Form von selbst, während sie für extrudierte Wabenkörper bisher nicht in Betracht gezogen wurde.

Eine erhöhte Elastizität läßt sich allerdings auch mit polygonalen Querschnitten erreichen, wenn die Kanäle selbst nicht entlang von geraden Linien, sondern entlang von von innen nach außen gebogenen Linien angeordnet werden, vorzugsweise entlang von etwa evolventenförmig verlaufenden Linien. Auch die Elastizität so aufgebauter Körper ist deutlich erhöht gegenüber Körpern mit entlang von geraden Linien angeordneten Kanälen.

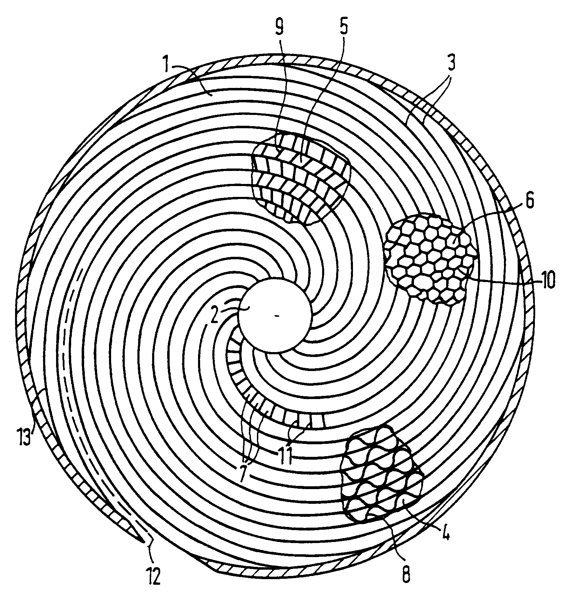

In der Zeichnung sind anhand eines schematisch dargestellten Wabenkörpers verschiedene Ausführungsmöglichkeiten der Erfindung verdeutlicht. Der Wabenkörper 1 zeichnet sich generell dadurch aus, daß es keine in radialer Richtung durchgehenden Strukturen und auch keine etwa kreisförmigen starren Strukturen gibt. Die Kanäle sind entlang von evolventenförmig von einem Zentrum 2 nach außen verlaufenden Linien 3 angeordnet. Diese Linien können selbst als Trennwände ausgebildet sein. In diesem Falle können beispielsweise durch wellenförmig angeordnete zusätzliche Trennwände 8 Strömungskanäle 4 geschaffen werden, welche nur von gebogenen Flächen berandet sind. In einer anderen Ausführungsform können die Querstege zwischen den evolventenförmig verlaufenden Trennwänden 3 auch gerade Stege 9 sein, so daß sich rechteckige oder rhombische Querschnitte der Strömungskanäle 5 einstellen. Die Richtung solcher Querstege sollte sich, wie anhand der Stege 11 angedeutet, dem Verlauf der gekrümmten Trennwände 3 anpassen, wodurch die Querschnittsfläche der so entstehenden Kanäle 7 annähernd konstant gehalten werden kann. Auch in einem erfindungsgemäßen Wabenkörper können allerdings polygonale Kanäle 6 verwendet werden, deren Wände 10 jedoch so angeordnet sind, daß die Kanäle nicht auf geraden Linien angeordnet sind, sondern den gekrümmten Linien 3 folgen. Schließlich ist es auch möglich, in einen solche Wabenkörper, wie schematisch angedeutet, Schlitze 12 parallel zu den gekrümmten Linien 3 vorzusehen, insbesondere zur elektrischen Unterteilung des Wabenkörpers. Auch verstärkte Trennwände 13 zur gezielten Einleitung von Kräften oder zur Beeinflussung des Schwingungsverhaltens des Wabenkörpers können vorgesehen werden.

Entsprechend der WO92/02717 ist es natürlich auch möglich, daß die gekrümmten Linien nicht genau einer Evolventenform folgen, sondern sich z. B. im Außenbereich oder im Innenbereich weiter öffnen, wodurch unterschiedliche Kanalquerschnitte im Außen- bzw. Innenbereich verwirklicht werden können.

Die vorliegende Erfindung eignet sich besonders für extrudierte elektrisch leitfähige Wabenkörper und für Einsatzgebiete, in denen hohe thermische Wechselbelastungen und damit große mechanische Spannungen zu beherrschen sind.

## Patentansprüche

1. Extrudierter Wabenkörper (1) aus keramischem und/oder metallischem Material mit einer Vielzahl von durch Trennwände voneinander getrennten etwa parallel verlaufenden Kanälen (4; 5; 6; 7)
dadurch gekennzeichnet,
daß zumindest in einem äußeren Querschnittsbereich des Wabenkörpers ein Teil der Trennwände (3) einer von innen nach außen spiralförmig oder etwa evolventenförmig gekrümmten Linie folgt, wobei Kanäle (4; 5; 6; 7) ebenfalls entlang dieser Linie angeordnet sind.

2. Wabenkörper nach Anspruch 1, dadurch gekennzeichnet, daß zwischen den gebogenen Trennwänden (3) Querstege (8; 9; 11) vorhanden sind, deren Richtung dem Verlauf der Linie angepaßt ist.

3. Wabenkörper nach einem der Ansprüche 1 oder 2, dadurch gekennzeichnet, daß der Wabenkörper (1) aus elektrisch leitfähigem Material besteht, insbesondere aus einem extrudierten Gemisch von Metall- und Keramikpulver, und Schlitze (12) zur elektrisch isolierenden Unterteilung aufweist.

4. Wabenkörper nach Anspruch 3, dadurch gekennzeichnet, daß die Schlitze (12) ebenfalls im Querschnitt gekrümmt verlaufen, vorzugsweise parallel zu gebogenen Trennwänden (3), insbesondere spiral- oder evolventenförmig von innen nach außen.

5. Wabenkörper nach einem der vorhergehenden Ansprüche, dadurch gekennzeichnet, daß ein Teil (13) der Trennwände (3) dicker ist als die übrigen Trennwände (3).

6. Wabenkörper nach einem der vorhergehenden Ansprüche, dadurch gekennzeichnet, daß die Trennwände (3, 8) im Wesentlichen nur aus gekrümmten Abschnitten bestehen.

7. Wahenkörper nach Anspruch 1, dadurch gekennzeichnet, daß die einzelnen Strömungskanäle (5; 6; 7) zwar annähernd polygonale Querschnitte haben, daß diese jedoch an dieser Linie ausgerichtet sind, wodurch die Wände (9; 10; 11) voneinander beabstandeter Strömungskanäle nicht parallel zueinander liegen.

## Claims

1. An extruded honeycomb (1) of ceramic and/or metal material having a plurality of passages (4; 5; 6; 7) which are separated from each other by partition walls and which extend substantially parallel, characterised in that at least in an outer cross-sectional region of the honeycomb body a part of the partition walls (3) follows a line which is curved from the inside outwardly in a spiral configuration or an approximately involute configuration, wherein passages (4; 5; 6; 7) are also arranged along said line.

2. A honeycomb body according to claim 1 characterised in that provided between the bent partition walls (3) are transverse web portions (8; 9; 11) whose direction is adapted to the configuration of the line.

3. A honeycomb body according to one of claims 1 and 2 characterised in that the honeycomb body (1) comprises electrically conductive material, in particular an extruded mixture of metal and ceramic powder, and has slots (12) for electrically insulating subdivision.

4. A honeycomb body according to claim 3 characterised in that the slots (12) also extend in a curved configuration in cross-section, preferably parallel to bent partition walls (3), in particular from the inside outwardly in a spiral or involute configuration.

5. A honeycomb body according to one of the preceding claims characterised in that a part (13) of the partition walls (3) is thicker than the other partition walls (3).

6. A honeycomb body according to one of the preceding claims characterised in that the partition walls (3, 8) comprise substantially only curved portions.

7. A honeycomb body according to claim 1 characterised in that the individual flow passages (5; 6; 7) are admittedly of approximately polygonal cross-sections but that they are oriented to said line, whereby the walls (9; 10; 11) of mutually spaced flow passages are not disposed in parallel relationship with each other.

## Revendications

1. Corps alvéolaire extrudé (1) en matériau céramique et/ou métallique, comportant une pluralité de canaux (4 ; 5 ; 6 ; 7) approximativement parallèles qui sont séparés les uns des autres par des cloisons de séparation,
caractérisé en ce que,
au moins dans une zone de section transversale extérieure du corps alvéolaire, une partie des cloisons de séparation (3) s'étend de l'intérieur vers l'extérieur suivant une ligne courbe en forme de spirale ou de développante, des canaux (4 ; 5 ; 6 ; 7) étant également disposés le long de cette ligne.

2. Corps alvéolaire selon la revendication 1, caractérisé en ce que des entretoises transversales (8 ; 9 ; 11) sont prévues entre les cloisons de séparation cintrées (3), dont la direction est adaptée à l'évolution de la ligne.

3. Corps alvéolaire selon l'une des revendications 1 ou 2, caractérisé en ce que le corps alvéolaire (1) est constitué de matériau électriquement conducteur, notamment d'un mélange extrudé de poudre métallique et céramique, et comporte des fentes (12) destinées à la subdivision électriquement isolante.

4. Corps alvéolaire selon la revendication 3, caractérisé en ce que les fentes (12) s'étendent également de l'intérieur vers l'extérieur selon une section transversale cintrée, de préférence parallèlement aux cloisons de séparation cintrées (3), notamment en forme de spirale ou de développante.

5. Corps alvéolaire selon l'une quelconque des revendications précédentes, caractérisé en ce qu'une partie (13) des cloisons de séparation (3) est plus épaisse que le reste des cloisons de séparation (3).

6. Corps alvéolaire selon l'une quelconque des revendications précédentes, caractérisé en ce que les cloisons de séparation (3, 8) sont pour l'essentiel constituées de tronçons cintrés.

7. Corps alvéolaire selon la revendication 1, caractérisé en ce que, bien que les différents canaux de circulation (5 ; 6 ; 7) aient des sections transversales polygonales, ceux-ci sont cependant orientés le long de cette ligne, de sorte que les cloisons (9 ; 10 ; 11) de canaux de circulation écartés les uns des autres ne sont pas parallèles entre elles.
